# EUROPÄISCHE PATENTSCHRIFT

(11) **EP 2 827 213 B1**
(45) Veröffentlichungstag und Bekanntmachung des Hinweises auf die Patenterteilung: **06.07.2016**
(21) Anmeldenummer: 14165634.8
(22) Anmeldetag: 23.04.2014
(51) Int. Cl.: G05D 1/02, A01D 43/07, A01D 57/00

(54) **Fahrzeugverbund, Vorrichtung und Verfahren zu dessen Koordination**
Vehicle combination, device and method for its coordination
Véhicule composite, dispositif et son procédé de coordination

(30) Priorität: 19.07.2013 DE 102013012026
(43) Veröffentlichungstag der Anmeldung: 21.01.2015
(73) Patentinhaber: CLAAS Selbstfahrende Erntemaschinen GmbH, 33428 Harsewinkel (DE)
(72) Erfinder: Krause, Thilo, 39249 Glinde (DE); Middelberg, René, 49078 Osnabrück (DE)

(56) Entgegenhaltungen:
- EP-A1- 1 977 640
- EP-A1- 2 510 775
- EP-B1- 2 020 174
- WO-A1-03/101178
- US-A1- 2012 215 394

## Beschreibung

Die vorliegende Erfindung betrifft einen Fahrzeugverbund von zwei koordiniert arbeitenden Fahrzeugen, insbesondere einer Erntemaschine und eines Transportfahrzeugs, das Erntegut von der Erntemaschine übernimmt, sowie eine Vorrichtung und ein Verfahren zu deren Koordination.

Erntemaschinen vom Typ Feldhäcksler sind in der Regel nicht ausgelegt, um nennenswerte Mengen an Erntegut an Bord zu speichern; stattdessen wird das gehäckselte Erntegut fortlaufend auf ein benachbart fahrendes Transportfahrzeug übergeladen. Erntemaschinen vom Typ Mähdrescher verfügen zwar meist über eingebaute Erntegutspeicher, so dass sie im Ernteeinsatz nicht ständig von einem Transportfahrzeug begleitet sein müssen, doch ist es auch hier wünschenswert, den Inhalt des Erntegutspeichers während der Fahrt auf ein Transportfahrzeug überladen zu können, um in der für das Überladen benötigten Zeit den Erntevorgang nicht unterbrechen zu müssen.

In beiden Fällen muss die Position der beiden Fahrzeuge in Bezug aufeinander während des Überladens genau gesteuert werden, um sicherzustellen, dass das übergeladene Erntegut vollständig in einen Laderaum des Transportfahrzeugs gelangt, andererseits sollte diese Position auch kontrolliert variiert werden, um das Erntegut im Laderaum gleichmäßig zu verteilen und so die Kapazität des Transportfahrzeugs gut auszunutzen.

Eine aus EP 2 020 174 B1 bekannte Vorrichtung zum Koordinieren zweier Fahrzeuge verwendet eine Kamera, um in Bildern des Laderaums einerseits Bezugspunkte für die Positionierung der Fahrzeuge relativ zueinander, namentlich die Ränder eines Laderaums, zu identifizieren und um andererseits das Höhenprofil des Ernteguts im Laderaum zu erfassen und anhand dieses Höhenprofils über die Notwendigkeit einer Änderung der Position der beiden Fahrzeuge in Bezug aufeinander zu entscheiden.

Um den Auftreffort des übergeladenen Ernteguts am Transportfahrzeug zu verändern, kann bei der herkömmlichen Vorrichtung die Stellung der Überladeeinrichtung an der Erntemaschine verändert werden. Die Überladeeinrichtung ist ein Auswurfkrümmer, der um zwei Achsen schwenkbar ist und an seinem Ende eine schwenkbare Klappe trägt. Es ist zwar möglich, eine für eine gewünschte Verlagerung des Auftreffpunkts erforderliche Verstellung der Überladeeinrichtung in ihren diversen Freiheitsgraden zu berechnen und Aktuatoren entsprechend anzusteuern; Abweichungen zwischen einer gewünschten und einer tatsächlichen Verlagerung treten dennoch auf, unter anderem aufgrund von Spiel in den Lagern des Auswurfkrümmers sowie zwischen diesem und den ihn antreibenden Aktuatoren.

Eine ändere Möglichkeit, den Auftreffpunkt zu verändern, ist, beide Fahrzeuge zeitweilig mit unterschiedlichen Geschwindigkeiten fahren zu lassen. Dabei ergibt sich jedoch das Problem, dass die Fahrzeuge Zeit benötigen, um ihre Geschwindigkeit einer Veränderung der Sollgeschwindigkeit nachzuführen, so dass die Bewegung der Fahrzeuge relativ zueinander und eine daraus resultierende Verlagerung des Auftreffpunkts des Erntegutstroms am zweiten Fahrzeug während einer Geschwindigkeitsänderung schwierig vorherzusagen sind. Außerdem ist es schwierig, die für eine gewünschte Geschwindigkeitsänderung erforderliche Änderung der Antriebsleistung genau vorherzusagen und einzustellen. Zwar ist es in einem geschlossenen Regelkreis möglich, die aus einer Änderung der Antriebsleistung resultierende Geschwindigkeitsänderung zu messen und ggf. die Antriebsleistung nachzukorrigieren, doch nimmt dies beträchtliche Zeit in Anspruch. Eine schnelle und gleichzeitig genaue Verschiebung des Auftreffpunkts ist deshalb über eine Änderung der Fahrzeuggeschwindigkeit nur schwerlich zu steuern.

Aufgabe der vorliegenden Erfindung ist daher, eine Vorrichtung und ein Verfahren anzugeben, mit denen eine Verlagerung des Auftrefforts schnell und genau gesteuert werden kann.

Die Aufgabe wird zum einem gelöst, indem bei einer Vorrichtung zum Koordinieren von zwei Fahrzeugen mit einer Überwachungsvorrichtung zum Überwachen des Überladens vom ersten auf das zweite Fahrzeug und einer Steuereinheit, die eingerichtet ist, eine Geschwindigkeitsdifferenz zwischen den beiden Fahrzeugen zu steuern, die Steuereinheit ferner eingerichtet ist, mittels der Überwachungsvorrichtung die Position eines Auftrefforts eines von einer Überladeeinrichtung des ersten Fahrzeugs ausgestoßenen Ladegutstroms am zweiten Fahrzeug zu erfassen und im Falle einer Abweichung der erfassten von einer Zielposition die Geschwindigkeitsdifferenz von Null verschieden einzustellen, bis die erfasste Position mit der Zielposition übereinstimmt. D.h. anstatt in herkömmlicher Weise nur die Position von Referenzpunkten der Fahrzeuge zueinander zu überwachen und diese im Falle einer Sollabweichung ggf. durch eine Geschwindigkeitsänderung zu korrigieren, wird erfindungsgemäß der - am zweiten Fahrzeug bewegliche - Auftreffort zum Gegenstand der Überwachung und wird, wenn nötig, durch eine Geschwindigkeitsänderung korrigiert.

Vorzugsweise ist die Steuereinheit eingerichtet, die Geschwindigkeitsdifferenz durch Veränderung der Geschwindigkeit des zweiten Fahrzeugs zu steuern. Wenn sich währenddessen das erste Fahrzeug mit konstanter Geschwindigkeit durch den Erntegutbestand bewegt, ändert sich auch der Erntegutdurchsatz im ersten Fahrzeug nicht. Die Parameter der Verarbeitung des Ernteguts im ersten Fahrzeug können daher konstant gehalten werden, und Schwankungen in der Qualität des übergeladenen Ernteguts können vermieden werden.

Die Vorrichtung umfasst vorzugsweise auch wenigstens einen Aktuator zum Bewegen der Überladeeinrichtung relativ zu einem Bezugspunkt am ersten Fahrzeug. Da für eine Verstellung der Überladeeinrichtung wesentlich weniger Masse zu beschleunigen bzw. zu verzögern ist als für eine Geschwindigkeitsänderung eines Fahrzeugs, kann diese Verstellung in kurzer Zeit, auch über eine größere Entfernung hinweg, vollzogen werden. Der Auftreffort kann daher von einer Stelle, an der die Gefahr einer Überfüllung besteht, schnell zumindest in die Nähe einer noch aufnahmefähigen Stelle verlagert werden, so dass die Gefahr einer lokalen Überfüllung des Laderaums trotz einer eventuellen Ungenauigkeit beim Verstellen der Überladeeinrichtung zunächst gebannt ist. Zum Korrigieren der Ungenauigkeit steht dann mehr Zeit zur Verfügung, und indem diese Korrektur über die Fahrzeuggeschwindigkeit vorgenommen wird, kann ein Pendeln der Überladeeinrichtung, das aus einer ungenügenden Kontrollierbarkeit ihrer Bewegung resultieren würde, vermieden werden.

Die Steuereinheit sollte daher zweckmäßigerweise eingerichtet sein, zwischen einer Neufestlegung der Zielposition und dem Erfassen der Position des Auftrefforts eine für die Verlagerung des Auftrefforts an die Zielposition erforderliche Verstellung des Aktuators zu berechnen und die berechnete Verstellung zu steuern. So kann durch Verstellen der Überladeeinrichtung ein Großteil der gewünschten Verlagerung des Auftrefforts in kurzer Zeit bewerkstelligt werden, so dass, wenn die Position des Auftrefforts erfasst wird, die ggf. über die Steuerung der Geschwindigkeitsdifferenz zu behebende Abweichung von der Zielposition nur noch gering ist und in kurzer Zeit behoben werden kann.

Je nach Abmessungen der Überladeeinrichtung und der Ladefläche kann es vorkommen, dass eine gewünschte Verlagerung des Auftrefforts durch Verstellen des Aktuators allein nicht realisierbar ist. Um auch in einem solchen Fall die gewünschte Verlagerung in kurzer Zeit zu erreichen, ist es zweckmäßig, den Abstand zwischen gewünschtem und tatsächlichem Auftreffort durch Steuern der Geschwindigkeitsdifferenz zu vermindern. Diese Geschwindigkeitssteuerung kann in diesem Fall die einzige Maßnahme zum Erzielen der gewünschten Verlagerung sein, oder sie kann gleichzeitig mit einem Verstellen des Aktuators stattfinden; wesentlich ist für eine schnelle Realisierung der Verstellung, dass in diesem Fall nicht zuerst die Überladeeinrichtung verstellt wird und erst anschließend die wegen zu geringer Reichweite der Überladevorrichtung unvermeidliche Abweichung zwischen gewünschter und tatsächlicher Verlagerung eine Geschwindigkeitsänderung bewirkt.

Die Steuereinheit kann ferner mit einer Sensorik zum Erfassen der Ladegutverteilung verbunden und eingerichtet sein, die gewünschte Verlagerung des Auftrefforts anhand der erfassten Ladegutverteilung selbst festzulegen.

Eine solche Sensorik kann über die Ladefläche des zweiten Fahrzeugs verteilte Kraft- oder Füllstandssensoren umfassen; es kann zu diesem Zweck aber auch stattdessen eine Kamera, vorzugsweise dieselbe Kamera wie zum Erfassen des Auftrefforts, verwendet werden.

Diese Kamera kann zweckmäßigerweise an der Überladeeinrichtung angebracht sein. Indem die Kamera Verstellungen der Überladeeinrichtung mitmacht, ändert sich die Lage des Auftrefforts in den von der Kamera gelieferten Bildern nur wenig, wenn die Überladeeinrichtung verstellt wird, was die automatische Erkennung des Auftrefforts in den Bildern erleichtert. Referenzpunkte an der Ladefläche bewegen sich hingegen stark in den Bildern der Kamera, wenn die Überladeeinrichtung bewegt wird. Im Gegensatz zum Auftreffort können diese Referenzpunkte, jedoch, insbesondere durch Farbe oder Form, so gestaltet sein, dass sie in den Bildern leicht automatisch zu identifizieren sind.

Die Aufgabe wird ferner gelöst durch einen Fahrzeugverbund mit einem ersten Fahrzeug, dass das relativ zu einem Bezugspunkt am ersten Fahrzeug bewegbare Überladeeinrichtung aufweist, einem zweiten Fahrzeug, das einen mittels der Überladeeinrichtung beladbaren Laderaum aufweist, und einer Vorrichtung zum Koordinieren dieser Fahrzeuge wie oben beschrieben.

Wenigstens die Steuereinheit einer solchen Vorrichtung befindet sich vorzugsweise an Bord des ersten Fahrzeugs. Dies ermöglicht eine wirtschaftliche Implementierung der Erfindung, da nur eine einzige solche Steuereinheit benötigt wird, auch wenn das erste Fahrzeug mit wechselnden zweiten Fahrzeugen koordiniert werden muss.

Die Überladeeinrichtung kann den Strom des Ernteguts unmittelbar in den Laderaum des zweiten Fahrzeugs einspeisen. Wenn jedoch große Spurabstände zwischen erstem und zweitem Fahrzeug einzuhalten sind, kann es zweckmäßig sein, anstelle einer langen, den gesamten Spurabstand zwischen den Fahrzeugen überbrückenden Überladeeinrichtung am ersten Fahrzeug eine kürzere Überladeeinrichtung mit einer Überladehilfseinrichtung des zweiten Fahrzeugs zu kombinieren, die einen Ladegutstrom von der Überladeeinrichtung des ersten Fahrzeugs übernimmt und zum Laderaum weiterbefördert.

Um das Ladegut im Laderaum gleichmäßig zu verteilen, kann eine solche Überladehilfseinrichtung am zweiten Fahrzeug beweglich sein. In diesem Fall stellt das Aufnahmeende der Überladehilfseinrichtung den Auftreffort dar, der auch dann noch zuverlässig vom Ladegutstrom getroffen werden muss, wenn die Überladehilfseinrichtung am zweiten Fahrzeug bewegt wird.

Um die Koordination der Bewegungen von Überladeeinrichtung und Überladehilfseinrichtung zu vereinfachen, ist ein Antrieb der Überladehilfseinrichtung vorzugsweise durch dieselbe Steuereinheit gesteuert wie der Aktuator der Überladeeinrichtung.

Die Aufgabe wird ferner noch gelöst durch ein Verfahren zum Koordinieren des Überladens von einem ersten Fahrzeug auf ein zweites Fahrzeug, mit den Schritten
c) Erfassen der Position eines Auftrefforts eines von einer Überladeeinrichtung des ersten Fahrzeugs ausgestoßenen Ladegutstroms am zweiten Fahrzeug;
d) Vergleichen der erfassten Position mit einer Zielposition
e) im Falle einer Abweichung der erfassten von der Zielposition, Einstellen einer Geschwindigkeitsdifferenz zwischen den Fahrzeugen auf einen von Null verschiedenen Wert, bis die erfasste Position mit der Zielposition übereinstimmt.

Um die Zeit zu minimieren, die benötigt wird, um die erfasste Position mit der Zielposition in Übereinstimmung zu bringen, ist es zweckmäßig, vorab einen Schritt b) des Berechnens einer für die Verlagerung des Auftrefforts an die Zielposition erforderlichen Verstellung eines Aktuators (11, 12) und des Steuerns der Verstellung auszuführen.

Das Festlegen der Zielposition erfolgt vorzugsweise wiederum vorher in einem Schritt a) anhand der Verteilung des Ladeguts in einem Laderaum des zweiten Fahrzeugs.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Ansicht eines Feldhäckslers als erstes Fahrzeug eines erfindungsgemäßen Fahrzeugverbunds;
- Fig. 2: eine Blockdiagramm einer erfindungsgemäßen Koordinationsvorrichtung;
- Fig. 3: einen mit der Koordinationsvorrichtung ausgestatteten Fahrzeugverbund im Feldeinsatz;
- Fig. 4: ein Flussdiagramm eines von der Steuereinheit der Koordinationsvorrichtung ausgeführten Arbeitsverfahrens;
- Fig. 5: ein Flussdiagramm einer Variante des Arbeitsverfahrens; und
- Fig. 6: eine zweite Ausgestaltung eines erfindungsgemäßen Fahrzeugverbunds.

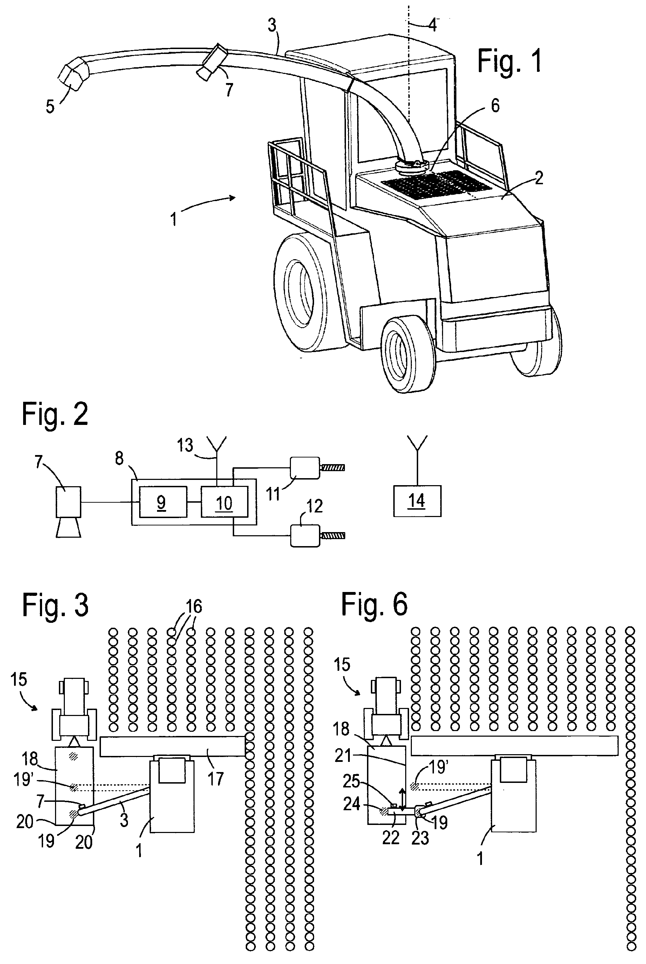

Fig. 1 zeigt einen Feldhäcksler 1 als Beispiel eines Fahrzeugs, das als erstes Fahrzeug im Rahmen eines erfindungsgemäßen Fahrzeugverbunds einsetzbar ist. An einer vom Betrachter abgewandten Vorderseite des Feldhäckslers 1 ist ein Erntevorsatz montierbar, der in der Figur nicht dargestellt ist, da ein beliebiger herkömmlicher Erntevorsatz verwendet werden kann. Ein Maschinengehäuse 2 des Feldhäckslers 1 enthält in fachüblicher Weise ein Häckselwerk zum Zerkleinern von von dem Erntevorsatz aufgenommenem Erntegut und ein Gebläse, welches das zerkleinerte Erntegut in einen Auswurfkrümmer 3 hinein beschleunigt. Der Auswurfkrümmer 3 ist um eine vertikale Achse 4 drehbar, wodurch eine Auslassklappe 5 am freien Ende des Auswurfkrümmers 3 auf einer Kreisbahn beweglich ist. Um den Erntegutstrom in einem zweiten Freiheitsgrad, radial zur Achse 4, bewegen zu können, ist der Auswurfkrümmer 3 ferner um eine horizontale Achse 6 schwenkbar, und auch die Auslassklappe 5 ist schwenkbar, um den Strom des Ernteguts umzulenken.

Benachbart zur Auslassklappe 5 ist an dem Auswurfkrümmer 3 eine Kamera 7 montiert. Alternativ könnte die Kamera auch unabhängig vom Auswurfkrümmer 3, z.B. an einem an Maschinengehäuse 2 oder Fahrerkabine angebrachten Mast, montiert sein.

Die Kamera 7 ist Teil der in Fig. 2 als Blockdiagramm dargestellten Koordinationsvorrichtung. Ein Mikrocomputer 8 der Koordinationsvorrichtung bildet einerseits eine Bildverarbeitungseinheit 9, die programmiert ist, um aus von der Kamera 7 gelieferten Bildern diverse, im Folgenden noch genauer erläuterte Informationen zu extrahieren, und eine Steuereinheit 10, die anhand der von der Bildverarbeitungseinheit 9 gelieferten Informationen Aktuatoren 11, 12 zum Verstellen des Auswurfkrümmers 3 in wenigstens einem, vorzugsweise den oben beschriebenen zwei Freiheitsgraden und, über eine Funkschnittstelle 13, eine nachgeordnete Steuereinheit 14 eines Transportfahrzeugs ansteuert, um dieses auf einem Kurs mit vorgegebenen Versatz relativ zum Feldhäcksler 1 zu führen, der das Überladen des Ernteguts auf das Transportfahrzeug ermöglicht. Fig. 3 zeigt in einer schematischen Draufsicht den Feldhäcksler 1 und das Transportfahrzeug, z.B. ein Traktor mit Anhänger, hier mit 15 bezeichnet, im Feldeinsatz beim Ernten eines Bestandes von Pflanzen 16. Die Breite eines am Feldhäcksler 1 montierten Erntevorsatzes 17 ist so bemessen, dass der Auswurfkrümmer 3 des Feldhäckslers 1 den Laderaum 18 des Transportfahrzeugs 15 erreichen und von oben befüllen kann. In der in Fig. 3 mit durchgezogenen Strichen dargestellten Stellung des Auswurfkrümmers 3 trifft der Strom des Häckselguts im Laderaum 18 auf einen Auftreffort 19 in der Nähe des Hecks. Die Kamera 7 überwacht den Überladevorgang und liefert an die Bildbearbeitungseinheit 9 Bilder, welche den Auftreffort 19 sowie Referenzpunkte 20 am Transportfahrzeug 15, wie etwa Ecken des Laderaums 18, zeigen. Anhand der von der Bildbearbeitungseinheit 9 aus diesen Bildern extrahierten Informationen ist die Steuereinheit 10 in der Lage, Koordinaten der Referenzpunkte 20 in einem auf den Feldhäcksler 1 bezogenen Koordinatensystem (und damit auch die korrekte Positionierung des Transportfahrzeugs 15 zum Feldhäcksler 1) zu überprüfen, die Koordinaten des Auftrefforts 19 relativ zu den Referenzpunkten 20 und die Füllhöhe des Ernteguts in der Umgebung des Auftrefforts 19 einzuschätzen, und, wenn nötig, auf den Kurs und/oder die Geschwindigkeit eines der beiden Fahrzeuge 1, 15, vorzugsweise des Transportfahrzeugs 15, Einfluss zu nehmen, um eine gewünschte Relativposition wieder herzustellen.

Wenn am Auftreffort 19 ein vorgegebener Füllstand des Ernteguts erreicht ist, verlagert die Steuereinheit 10 den Auftreffort des Erntegutstroms an eine Stelle 19', entweder wie in Fig. 3 durch einen gestrichelten Umriss angedeutet, durch Bewegen des Auswurfkrümmers 3 relativ zum Maschinengehäuse 2 des Feldhäckslers 1, insbesondere Drehen um die Achse 4, oder durch zeitweiliges Variieren der Geschwindigkeit eines der beiden Fahrzeuge 1, 15.

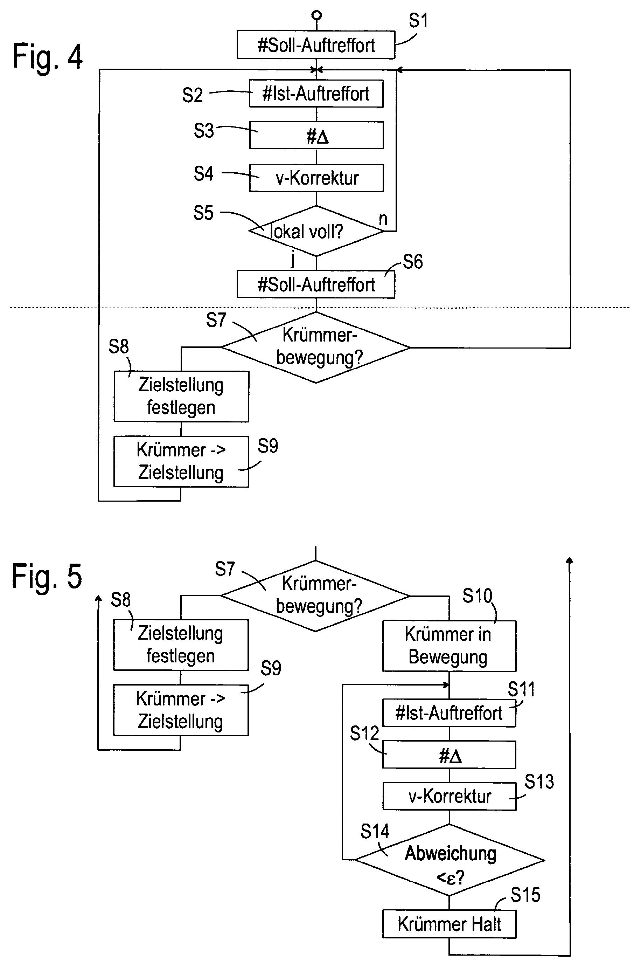

Ein Flussdiagramm eines Verfahrens, nach welchem eine solche Steuerung abläuft, ist in Fig. 4 dargestellt. Ein Überladevorgang beginnt in Schritt S1 damit, dass die Steuereinheit 10 einen Soll-Auftreffort für den Erntegutstrom im Laderaum 18, etwa den Auftreffort 19 der Fig. 3, festlegt. Die Bildverarbeitungseinheit 9 bestimmt die Koordinaten des Ist-Auftrefforts des Erntegutstroms relativ zu den Referenzpunkten 20 in Schritt S2 anhand von Bildern der Kamera 7. In Schritt S3 berechnet die Steuereinheit 10 den Abstand Δ zwischen Soll- und Ist-Auftreffort. Dieser Abstand Δ dient in Schritt S4 als Sollabweichungssignal eines Geschwindigkeitsregelkreises, der die Geschwindigkeit des Transportfahrzeuges 15 fortlaufend an die des Feldhäckslers 1 angleicht.

Nur solange ein vorgegebener Zielfüllstand am Auftreffort 19 noch nicht erreicht ist, werden die Schritte S2 bis S4 in einer Endlosschleife durchlaufen. Wenn der Zielfüllstand jedoch erreicht ist, verzweigt das Verfahren zu Schritt S6, in welchem ein neuer Soll-Auftreffort, z. B. der Auftreffort 19', festgelegt wird. Anhand des Abstandes zwischen altem und neuem Soll-Auftreffort, Stellung und Abmessungen des Auswurfkrümmers 3 ist die Steuereinheit 10 in Lage, zu entscheiden, ob der neue Soll-Auftreffort durch eine Bewegung des Auswurfkrümmers 3, ohne Änderung des Abstands der Fahrzeuge 1, 15 voneinander, erreichbar ist oder nicht. Wenn der neue Soll-Auftreffort nicht durch eine Bewegung des Auswurfkrümmers erreichbar ist, springt das Verfahren sofort und direkt zurück zum Schritt S2, mit der Folge, dass der Abstand Δ zwischen neuem Soll-Auftreffort und Ist-Auftreffort in Schritt S4 als Sollabweichung in die Geschwindigkeitsregelung eingeht. In der Folge wird das Fahrzeug 15 solange beschleunigt oder verzögert, bis der Erntegutstrom den neuen Auftreffort trifft, ohne dass dafür die Stellung des Auswurfkrümmers 3 am Feldhäcksler 1 verändert worden wäre.

Der Geschwindigkeitsregelkreis muss eine einigermaßen hohe Zeitkonstante haben, damit eine plötzliche Änderung des Fehlers Δ nicht zu übermäßigen Geschwindigkeitsänderungen und in der Folge zu einem Pendeln der Position des Transportfahrzeugs 15 relativ zum Feldhäcksler 1 führt. Dementsprechend lange dauert auf diesem Wege auch die Änderung des Auftrefforts.

Wenn hingegen festgestellt wird, dass der neue Auftreffort 19' innerhalb der Reichweite des Auswurfkrümmers 3 liegt, dann berechnet die Steuereinheit 10 in Schritt S8 zunächst eine Zielstellung des Auswurfkrümmers 3, in der - unter Vernachlässigung von Störeinflüssen wie insbesondere inhärenter Ungenauigkeit der Aktuatoren 11, 12 oder Spiel zwischen den Aktuatoren 11, 12 und dem Auswurfkrümmer 3 - der von diesem ausgestoßene Erntegutstrom den neuen Auftreffort 19' treffen müsste. In Schritt S9 wird dann der Auswurfkrümmer in die so berechnete Zielstellung gefahren. Das Verfahren kehrt nun zu Schritt S2 zurück, um den tatsächlichen Auftreffort zu erfassen und die Abweichung Δ zu berechnen (S3). Die Korrektur dieser Abweichung Δ erfolgt anschließend durch Feinregelung der Geschwindigkeit in der Endlosschleife der Schritte S2 bis S4. Da aufgrund der vorangegangenen Verstellung des Auswurfkrümmern 2 die Abweichung Δ zu keinem Zeitpunkt groß ist, kommt es zu keinen starken Korrekturen der Geschwindigkeit, und ein stationärer Zustand, in welchem der Erntegutstrom sich stationär auf den Auftreffort 19' ergießt, wird schnell erreicht.

Eine Variante des Verfahrens ist in Fig. 5 dargestellt. Die Schritte S1 bis S9 dieses Verfahren sind mit demjenigen der Fig. 4 identisch, deswegen werden sie nicht erneut erläutert und sind die Schritte S1 bis S6 in Fig. 5 nicht dargestellt. Wenn sich nach Festlegung eines neuen Soll-Auftrefforts (S6) in Schritt S7 herausstellt, dass der neue Soll-Auftreffort durch eine Bewegung des Auswurfkrümmers 3 allein nicht erreichbar ist, dann setzt die Steuereinheit 10 mit Hilfe der Aktuatoren 11, 12 zunächst in Schritt S10 den Auswurfkrümmer 3 in Richtung der neuen Zielstellung in Bewegung. Während sich der Auswurfkrümmer 3 bewegt, wird wie in Schritt S2 mit Hilfe der Kamera 7 der sich verändernde Ist-Auftreffort erfasst (S11), die Abweichung Δ zwischen Soll- und Ist-Auftreffort wird berechnet (S12) und als Sollwertabweichung in den Geschwindigkeitsregelkreis eingegeben (S13). Wenn in S14 festgestellt wird, dass die Sollwertabweichung noch über einem Grenzwert e liegt, werden die Schritte S11 bis S13 wiederholt, anderenfalls wird der Auswurfkrümmer 3 in Schritt S15 angehalten. In Folge der Gleichzeitigkeit von Geschwindigkeitskorrektur und Bewegung des Auswurfkrümmers 3 nimmt die Abweichung Δ schneller ab als im Verfahren nach Fig. 4, so dass ein stationärer Zustand schneller erreicht wird. Ein weiterer Vorteil des Verfahrens ist, dass, wenn mit diesem Verfahren ein Auftreffort nahe an einem Ende des Laderaums, wie etwa der Auftreffort 19, angefahren worden ist, die Bewegungsfreiheit des Auswurfkrümmers 3 zur Mitte des Laderaums hin größer ist als in die Gegenrichtung, d. h. der Auswurfkrümmer 3 ist im Allgemeinen so platziert, dass ein großer Teil des Laderaums 18 durch eine Bewegung des Auswurfkrümmers 3 allein, ohne die Notwendigkeit einer Bewegung der Fahrzeuge 1, 15 relativ zueinander, erreichbar ist.

Fig. 6 zeigt eine zweite Ausgestaltung eines Verbundes von Fahrzeugen 1, 15 gemäß der vorliegenden Erfindung. Bei dieser Ausgestaltung trägt der Feldhäcksler 1 einen Erntevorsatz 17, der so breit ist, dass der Auswurfkrümmer 3 seitwärts nicht über das Ende des Erntevorsatzes 17 hinausreicht. Damit das Transportfahrzeug 15 dennoch beladen werden kann, ist an einer Längswand 21 des Laderaums 18 eine Hilfseinrichtung wie etwa ein Förderband 22 verfahrbar montiert. Der im Verfahren nach Fig. 4 oder 5 überwachte Auftreffort 19 für den vom Auswurfkrümmer 3 ausgestoßenem Erntegutstrom ist hier ein Auffangtrichter 23 des Förderbands 22. Zusätzlich zum Auffangtrichter 23 kann die Kamera 7 optional auch einen Ort 24 im Laderaum 18 überwachen, auf dem das Förderband 22 den Erntegutstrom abwirft; zu diesem Zweck kann aber auch eine am Förderband 22 montierte und mit diesem entlang der Längswand 21 verfahrbare Kamera 25 eingesetzt werden.

Wenn am Ort 24 der Zielfüllstand erreicht ist und der Laderaum 18 an anderer Stelle befüllt werden muss, legt auch hier die Steuereinheit 10 einen neuen Soll-Auftreffort 19' fest. Unabhängig davon, ob der neue Auftreffort 19' durch eine Bewegung des Auswurfkrümmers 3 alleine erreichbar ist oder die Position der Fahrzeuge 1, 15 zueinander verändert werden muss, steuert die Steuereinheit 10 die Verstellung des Förderbands 22 entlang der Wand 21, so dass dessen Auffangtrichter 23 jederzeit vom Erntegutstrom getroffen wird.

### Bezugszeichen

- 1.: Feldhäcksler
- 2.: Maschinengehäuse
- 3.: Auswurfkrümmer
- 4.: Achse
- 5.: Auslass
- 6.: Achse
- 7.: Kamera
- 8.: Computer
- 9.: Bildverarbeitungseinheit
- 10.: Steuereinheit
- 11.: Aktuator
- 12.: Aktuator
- 13.: Funkschittstelle
- 14.: Steuereinheit
- 15.: Tranportfahrzeug
- 16.: Pflanze
- 17.: Erntevorsatz
- 18.: Laderaum
- 19.: Auftreffort
- 20.: Referenzpunkt
- 21.: Längswand
- 22.: Förderband
- 23.: Auffangtrichter
- 24.: Ort
- 25.: Kamera

## Patentansprüche

1. Vorrichtung zum Koordinieren von zwei Fahrzeugen, mit einer Überwachungsvorrichtung (7) zum Überwachen des Überladens vom ersten auf das zweite Fahrzeug und einer Steuereinheit (10), die eingerichtet ist, eine Geschwindigkeitsdifferenz zwischen den beiden Fahrzeugen (1, 15) zu steuern (S4) und eine Zielposition für den Auftreffort eines von einer Überladeeinrichtung (3) des ersten Fahrzeugs (1) ausgestoßenen Ladegutstroms am zweiten Fahrzeug (15) festzulegen,
**dadurch gekennzeichnet, dass**
die Steuereinheit (10) ferner eingerichtet ist, mittels der Überwachungsvorrichtung (7) die Position eines Auftrefforts (19) eines von der Überladeeinrichtung (3) des ersten Fahrzeugs (1) ausgestoßenen Ladegutstroms am zweiten Fahrzeug (15) zu erfassen und im Falle einer Abweichung der erfassten Position des Auftrefforts (19) von der Zielposition die Geschwindigkeitsdifferenz von Null verschieden einzustellen, bis die erfasste Position mit der Zielposition übereinstimmt.

2. Vorrichtung nach Anspruch 1, **dadurch gekennzeichnet, dass** die Steuereinheit (10) eingerichtet ist, die Geschwindigkeitsdifferenz durch Verändern der Geschwindigkeit des zweiten Fahrzeugs (15) zu steuern.

3. Vorrichtung nach Anspruch 1 oder 2, **gekennzeichnet durch** wenigstens einen Aktuator (11, 12) zum Bewegen der Überladeeinrichtung (3) relativ zu einem Referenzpunkt (2) des ersten Fahrzeugs (1).

4. Vorrichtung nach Anspruch 3, **dadurch gekennzeichnet, dass** die Steuereinheit (10) eingerichtet ist, zwischen einer Neufestlegung der Zielposition und dem Erfassen der Position des Auftrefforts (19) eine für die Verlagerung des Auftrefforts (19) an die Zielposition erforderliche Verstellung des Aktuators (11, 12) zu berechnen und die berechnete Verstellung zu steuern (S9).

5. Vorrichtung nach Anspruch 4, **dadurch gekennzeichnet, dass** die Steuereinheit (10) eingerichtet ist, zu überprüfen, ob die neu festgelegte Zielposition durch Verstellen der Überladeeinrichtung (3) realisierbar ist (S7), und, wenn dies nicht der Fall ist, zwischen der Neufestlegung der Zielposition und dem Erfassen der Position des Auftrefforts (19) den Abstand zwischen der Zielposition und der tatsächlichem Position des Auftrefforts durch Steuern der Geschwindigkeitsdifferenz (S4; S13) zu vermindern.

6. Vorrichtung nach einem der vorhergehenden Ansprüche, **dadurch gekennzeichnet, dass** die Steuereinheit (10) mit einer Sensorik (7; 25) zum Erfassen der Ladegutverteilung verbunden und eingerichtet ist, eine neue Zielposition des Auftrefforts (19) anhand der erfassten Ladegutverteilung festzulegen.

7. Vorrichtung nach einem der vorhergehenden Ansprüche, **dadurch gekennzeichnet, dass** der Sensor zum Erfassen des Auftrefforts (19) und/oder die Sensorik zum Erfassen der Ladegutverteilung eine Kamera (7; 25) ist.

8. Vorrichtung nach Anspruch 7, **dadurch gekennzeichnet, dass** die Kamera (7) an der Überladeeinrichtung (3) angebracht ist.

9. Fahrzeugverbund mit einem ersten Fahrzeug (1), das eine Überladeeinrichtung (3) aufweist, einem zweiten Fahrzeug (15), das einen mittels der Überladeeinrichtung (3) beladbaren Laderaum (18) aufweist, und einer Vorrichtung nach einem der vorhergehenden Ansprüche.

10. Fahrzeugverbund nach Anspruch 9, **dadurch gekennzeichnet, dass** die Steuereinheit (10) sich an Bord des ersten Fahrzeugs (1) befindet.

11. Fahrzeugverbund nach Anspruch 9 oder 10, **dadurch gekennzeichnet, dass** das zweite Fahrzeug (15) eine Überladehilfseinrichtung (22) zum Übernehmen eines Ladegutstroms von der Überladeeinrichtung (3) des ersten Fahrzeugs und Weiterbefördern, wobei ein Aufnahmeende (23) der Überladehilfseinrichtung (22) den Auftreffort (19) bildet, und einen Antrieb zum Bewegen der Überladehilfseinrichtung (22) in Bezug auf den Laderaum (18) des zweiten Fahrzeugs (15) aufweist.

12. Fahrzeugverbund nach Anspruch 11, **dadurch gekennzeichnet, dass** der Antrieb durch die Steuereinheit (10) gesteuert ist.

13. Verfahren zum Koordinieren des Überladens von einem ersten Fahrzeug (1) auf ein zweites Fahrzeug (15), mit den Schritten:
c) Erfassen der Position eines Auftrefforts (19) eines von einer Überladeeinrichtung (3) des ersten Fahrzeugs (1) ausgestoßenen Ladegutstroms am zweiten Fahrzeug (15);
d) Vergleichen der erfassten Position mit einer Zielposition;
e) im Falle einer Abweichung der erfassten von der Zielposition, Einstellen einer Geschwindigkeitsdifferenz zwischen den Fahrzeugen (1, 15) auf einen von Null verschiedenen Wert, bis die erfasste Position mit der Zielposition übereinstimmt.

14. Verfahren nach Anspruch 13, mit dem vorbereitenden Schritt
b) Berechnen einer für die Verlagerung des Auftrefforts (19) an die Zielposition erforderlichen Verstellung eines Aktuators (11, 12) und Steuern der Verstellung.

15. Verfahren nach Anspruch 14, mit dem vorbereitenden Schritt
a) Festlegen der Zielposition anhand der Verteilung des Ladeguts in einem Laderaum (18) des zweiten Fahrzeugs (15).

## Claims

1. Apparatus for coordinating two vehicles, comprising a monitoring device (7) for monitoring transloading from the first on to the second vehicle and a control unit (10) which is adapted to control (S4) a speed differential between the two vehicles (1, 15) and to establish a target position for the impact location of a load material flow ejected by a transloading device (3) of the first vehicle (1) at the second vehicle (15),
**characterised in that**
the control unit (10) is further adapted by means of the monitoring device (7) to detect the position of an impact location (19) of a load material flow ejected by the transloading device (3) of the first vehicle (1) at the second vehicle (15) and in the event of a deviation in the detected position of the impact location (19) from the target position to set the speed differential to different from zero until the detected position coincides with the target position.

2. Apparatus according to claim 1 **characterised in that** the control unit (10) is adapted to control the speed differential by varying the speed of the second vehicle (15).

3. Apparatus according to claim 1 or claim 2 **characterised by** at least one actuator (11, 12) for moving the transloading device (3) relative to a reference point (2) of the first vehicle (1).

4. Apparatus according to claim 3 **characterised in that** the control unit (10) is adapted between a fresh establishment of the target position and the detection of the position of the impact location (19) to calculate an adjustment of the actuator (11, 12) that is required for displacement of the impact location (19) to the target position and to control the calculated adjustment (S9).

5. Apparatus according to claim 4 **characterised in that** the control unit (10) is adapted to check whether the freshly established target position can be implemented by adjustment of the transloading device (3) (S7) and if that is not the case between the fresh establishment of the target position and the detection of the position of the impact location (19) to reduce the spacing between the target position and the actual position of the impact location by control of the speed differential (S4; S13).

6. Apparatus according to one of the preceding claims **characterised in that** the control unit (10) is connected to a sensor arrangement (7; 25) for detecting the load material distribution and is adapted to establish a new target position for the impact location (19) on the basis of the detected load material distribution.

7. Apparatus according to one of the preceding claims **characterised in that** the sensor for detecting the impact location (19) and/or the sensor arrangement for detecting the load material distribution is a camera (7; 25).

8. Apparatus according to claim 7 **characterised in that** the camera (7) is mounted to the transloading device (3).

9. A vehicle combination comprising a first vehicle (1) having a transloading device (3), a second vehicle (15) having a load space (18) loadable by means of the transloading device (3), and an apparatus according to one of the preceding claims.

10. A vehicle combination according to claim 9 **characterised in that** the control unit (10) is on board the first vehicle (1).

11. A vehicle combination according to claim 9 or claim 10 **characterised in that** the second vehicle (15) has a transloading aid device (22) for receiving a load material flow from the transloading device (3) of the first vehicle and further conveying same, wherein a receiving end (23) of the transloading aid device (22) forms the impact location (19), and has a drive for moving the transloading aid device (22) in relation to the loading space (18) of the second vehicle (15).

12. A vehicle combination according to claim 11 **characterised in that** the drive is controlled by the control unit (10).

13. A method of coordinating transloading from a first vehicle (1) on to a second vehicle (15) comprising the steps:
c) detecting the position of an impact location (19) of a load material flow ejected by a transloading device (3) of the first vehicle (1) at the second vehicle (15);
d) comparing the detected position to a target position; and
e) in the event of a deviation of the detected position from the target position, adjustment of a speed differential between the vehicles (1, 15) to a value different from zero until the detected position is identical to the target position.

14. A method according to claim 13 comprising the preparatory step:
b) calculating an adjustment of an actuator (11, 12), that is required for displacement of the impact location (19) to the target position, and controlling the adjustment.

15. A method according to claim 14 comprising the preparatory step:
a) establishing the target position on the basis of the distribution of the load material in a loading space (18) of the second vehicle (15).

## Revendications

1. Dispositif pour coordonner deux véhicules, comprenant un dispositif de surveillance (7) pour surveiller le transfert depuis le premier véhicule vers le second et une unité de commande (10) qui est agencée pour commander (S4) une différence de vitesse entre les deux véhicules (1, 15) et pour définir une position cible pour le point d'impact, sur le second véhicule (15), d'un flux de produit chargé éjecté par un dispositif de transfert (3) du premier véhicule (1), **caractérisé en ce que** l'unité de commande (10) est également agencée pour détecter, au moyen du dispositif de surveillance (7), la position d'un point d'impact (19), sur le second véhicule (15), d'un flux de produit chargé éjecté par le dispositif de transfert (3) du premier véhicule (1) et, en cas de discordance entre la position détectée du point d'impact (19) et la position cible, pour régler la différence de vitesse à une valeur différente de zéro jusqu'à ce que la position détectée coïncide avec la position cible.

2. Dispositif selon la revendication 1, **caractérisé en ce que** l'unité de commande (10) est agencée de façon à commander la différence de vitesse en modifiant la vitesse du second véhicule (15).

3. Dispositif selon la revendication 1 ou 2, **caractérisé par** au moins un actionneur (11, 12) pour déplacer le dispositif de transfert (3) par rapport à un point de référence (2) du premier véhicule (1).

4. Dispositif selon la revendication 3, **caractérisé en ce que** l'unité de commande (10) est agencée afin de calculer, entre une redéfinition de la position cible et la détection de la position du point d'impact (19), un réglage de l'actionneur (11, 12) nécessaire pour déplacer le point d'impact (19) vers la position cible, et afin de commander (S9) le réglage calculé.

5. Dispositif selon la revendication 4, **caractérisé en ce que** l'unité de commande (10) est agencée pour contrôler si la position cible redéfinie est atteignable (S7) par un réglage du dispositif de transfert (3) et, si ce n'est pas le cas, pour réduire, entre la redéfinition de la position cible et la détection de la position du point d'impact (19), l'écart entre la position cible et la position réelle du point d'impact en commandant la différence de vitesse (S4 ; S13).

6. Dispositif selon une des revendications précédentes, **caractérisé en ce que** l'unité de commande (10) est reliée à un moyen de capteur (7 ; 25) apte à détecter la répartition du produit chargé et est agencée pour définir une nouvelle position cible du point d'impact (19) sur la base de la répartition détectée du produit chargé.

7. Dispositif selon une des revendications précédentes, **caractérisé en ce que** le capteur apte à détecter le point d'impact (19) et/ou le moyen de capteur apte à détecter la répartition du produit chargé est une caméra (7 ; 25).

8. Dispositif selon la revendication 7, **caractérisé en ce que** la caméra (7) est montée sur le dispositif de transfert (3).

9. Combinaison de véhicules comprenant un premier véhicule (1) qui comporte un dispositif de transfert (3), comprenant un second véhicule (15) qui comporte un espace de chargement (18) chargeable au moyen du dispositif de transfert (3), et comprenant un dispositif selon une des revendications précédentes.

10. Combinaison de véhicules selon la revendication 9, **caractérisée en ce que** l'unité de commande (10) se trouve à bord du premier véhicule (1).

11. Combinaison de véhicules selon la revendication 9 ou 10, **caractérisée en ce que** le second véhicule (15) comporte un dispositif d'aide au transfert (22) pour recevoir un flux de produit chargé provenant du dispositif de transfert (3) du premier véhicule et pour le redistribuer, une extrémité réceptrice (23) du dispositif d'aide au transfert (22) formant le point d'impact (19), et comporte un moyen d'entraînement pour déplacer le dispositif d'aide au transfert (22) par rapport à l'espace de chargement (18) du second véhicule (15).

12. Combinaison de véhicules selon la revendication 11, **caractérisée en ce que** le moyen d'entraînement est commandé par l'unité de commande (10).

13. Procédé pour coordonner le transfert à partir d'un premier véhicule (1) vers un second véhicule (15), comportant les étapes consistant à :
c) détecter la position d'un point d'impact (19), sur le second véhicule (15), d'un flux de produit chargé éjecté par un dispositif de transfert (3) du premier véhicule (1) ;
d) comparer la position détectée avec une position cible ;
e) en cas de discordance entre la position détectée et la position cible, régler une différence de vitesse entre les véhicules (1, 15) à une valeur différente de zéro jusqu'à ce que la position détectée coïncide avec la position cible.

14. Procédé selon la revendication 13, comprenant l'étape préparatoire consistant à b) calculer un réglage d'un actionneur (11, 12), nécessaire pour déplacer le point d'impact (19) vers la position cible, et commander le réglage.

15. Dispositif selon la revendication 14, comprenant l'étape préparatoire consistant à a) définir la position cible sur la base de la répartition du produit chargé dans un espace de chargement (18) du second véhicule (15).
